# EUROPÄISCHE PATENTSCHRIFT

(11) **EP 2 767 420 B1**
(45) Veröffentlichungstag und Bekanntmachung des Hinweises auf die Patenterteilung: **09.09.2015**
(21) Anmeldenummer: 14152431.4
(22) Anmeldetag: 24.01.2014
(51) Int. Cl.: B60G 7/00, F16C 7/08, F16F 1/38, B21D 53/88, B23P 11/00, B21D 39/06, B25B 27/28

(54) **Verfahren zur Herstellung eines Fahrwerkslenkers und Fahrwerkslenker für ein Fahrzeug**
Method of manufacturing of a suspension arm and suspension arm for a vehicle
Procédé de fabrication d'un bras de suspension et bras de suspension pour un véhicule

(30) Priorität: 14.02.2013 DE 102013002590
(43) Veröffentlichungstag der Anmeldung: 20.08.2014
(73) Patentinhaber: AUDI AG, 85045 Ingolstadt (DE)
(72) Erfinder: Hudler, Roland, 85077 Manching (DE)

(56) Entgegenhaltungen:
- EP-A2- 1 329 343
- DE-A1- 4 334 230
- DE-A1-102008 013 182
- DE-U1- 8 534 710
- FR-A1- 2 277 967
- JP-A- H08 233 009
- US-A- 1 943 631
- US-A- 3 121 348
- US-A- 4 656 721

## Beschreibung

Die vorliegende Erfindung betrifft ein Verfahren zur Herstellung eines Fahrwerkslenkers mit den Schritten Bereitstellen eines Fahrwerkslenkers, der in einem endständigen Lagerabschnitt mindestens zwei voneinander unter Ausbildung eines Freiraums beabstandete Stege aufweist, Einbringen von jeweils einer Lageröffnung in die entsprechenden Stege, wobei die Lageröffnungen koaxial zueinander ausgerichtet sind und Einführen einer Lagerhülse in die Lageröffnungen, sowie einen nach dem erfindungsgemäßen Verfahren hergestellten Fahrwerkslenker und ein Fahrzeug, das mit einem nach dem erfindungsgemäßen Verfahren hergestellten Fahrwerkslenker ausgerüstet ist.

Derartige Fahrwerkslenker, auch Querlenker oder einfach Lenker genannt, werden im Fahrzeugbau als Teil der Radaufhängung verwendet. Diese verbindet das Rad mit der Karosserie und führt es unter Gewährung bestimmter Freiheitsgrade. Zur schwenkbaren Befestigung des Fahrwerkslenkers an der Karosserie oder an einem Radträger ist dieser mit einem Lager zu versehen. Solche Fahrwerkslenker können aus umgeformten (Stahl-)Blechen oder aus (umgeformten) Strangpressprofilen erzeugt werden.

Gattungsgemäße Fahrwerkslenker sind unter anderem aus der DE 10 2009 025 429 A1, DE 10 2008 013 182 A1, US 3 121 348 A oder DE 10 2010 051 741 A1 bekannt. Diesen gemein ist, dass in einem endständigen Lagerabschnitt des Fahrwerkslenkers mindestens zwei voneinander unter Ausbildung eines Freiraums beabstandete Stege ausgebildet sind, in die jeweils eine Lageröffnung eingebracht ist, wobei die Lageröffnungen koaxial zueinander ausgerichtet sind. Die Lageröffnung dient zur Aufnahme eines Lagers, beispielsweise eines Gummi-Metall-Lagers, mit dem der Anschluss des Fahrwerkslenkers an einen Radträger oder eine Karosserie bzw. einen Hilfsrahmen des Fahrzeugs erfolgen kann.

Die DE 25 24 536 A1 beschreibt einen mit seinem Rücken am Fahrzeugaufbau eines Kraftfahrzeuges anschraubbaren U-förmigen Lagerbock, zwischen dessen beiden Schenkeln ein Lenker der Radaufhängung des Kraftfahrzeuges unter Verwendung eines Gummi-Metall-Lagers schwenkbar gelagert ist, wobei der Lagerbock zwei voneinander lösbare Bockteile, welche jeweils aus einer mit mindestens zwei Löchern versehenen Grundplatte und einer senkrecht dazu abgewinkelten, mit einer Lagerbohrung versehenen Lagerplatte bestehen, U-förmig zusammengesetzt ist. Die mit ihren Löchern fluchtend aufeinanderliegenden Grundplatten bilden den Rücken und die einander im Abstand gegenüberstehenden Lagerplatten bilden die freien Schenkel des Lagerbocks. Die beiden Lagerplatten liegen an den Stirnseiten des Gummi-Metall-Lagers an und sind mit diesem unter Erzeugung einer axialen Vorspannung mittels eines durch die beiden Lagerbohrungen und das Innenrohr des Gummi-Metall-Lagers hindurchgeführten Schraubbolzens verbunden.

Nachteilig an gattungsgemäßen Fahrwerkslenkern aus dem Stand der Technik ist, dass die beabstandeten Stege bei bestimmten Belastungen leicht zueinander in axialer Richtung der koaxialen Lageröffnungen verschoben bzw. verbogen werden können, was negative Auswirkungen auf den Festsitz des Lagers in den Lageröffnungen hat.

Die JP H08 233009 A offenbart ein Verfahren zur Herstellung eines Fahrwerkslenkers mit den Schritten Bereitstellen eines Fahrwerkslenkers, der in einem endständigen Lagerabschnitt mindestens zwei voneinander unter Ausbildung eines Freiraums beabstandete Stege aufweist, Einbringen von jeweils einer Lageröffnung in die entsprechenden Stege, wobei die Lageröffnungen koaxial zueinander ausgerichtet sind und Einführen einer Lagerhülse in die Lageröffnungen. Zur Verbindung der Lagerhülse mit den Stegen wird ein Schweißprozess oder eine plastische Umformung von Stegen und Lagerhülse zueinander vorgeschlagen.

Die EP 1 329 343 A2 beschreibt ein Konstruktionselement der Lenkeinrichtung eines Fahrzeuges, insbesondere eine Spurstange/Querlenker, mit mindestens einem wenigstens ein Befestigungselement aufweisenden Gelenkkopf, mit einem diesen kraft- und/oder formschlüssig umfassenden Gehäuse und einem daran anordenbaren Schaft. Der Gelenkkopf ist mit Kugelstück und Befestigungselementen und/oder das Gehäuse mit Schaft aus schalenförmigen Blechpressteilen zusammengefügt, die im Bereich jeweils einer Trennebene unter Ausbildung wenigstens teilweiser hohler Elemente fest miteinander verbunden, insbesondere zumindest partiell verschweißt sind.

Die US 4 656 721 A zeigt eine Leiter, wobei die Sprossen mittels einer axial umfangsaufgeweiteten Hülse mit jeweils einem der Holme verbunden ist. Die Umfangsaufweitungen schmiegen sich dabei formschlüssig an die Wandungen der hohlen Holme an.

Die DE 85 34 710 U1 beschreibt eine Achsführung für ein Automobil mit mindestens einer röhrenartigen Fassung für eine gelenkige Halterung der Achsführung, etwa am Rahmen des Automobils, wobei die Fassung Bördelungen aufweist und durch diese Bördelungen mit der Achsführung verbunden ist.

Die US 1 943 631 A offenbart eine Vorrichtung zur Aufnahme von zwei Kugelköpfen, wobei die Kugelköpfe jeweils in entsprechenden Pfannen gelagert sind. Die Pfannen werden durch plastische Umformung mit einer Platine verbunden, wobei die Pfannen radiale Umfangsaufweitungen bilden, welche die Platine formschlüssig einfassen.

Aufgabe der vorliegenden Erfindung ist es daher ein Verfahren zur Herstellung eines Fahrwerkslenkers bereitzustellen, mit dem ein dauerhafter Festsitz des Lagers gewährleistet ist.

Diese Aufgabe wird durch die Merkmale des Patentanspruchs 1 gelöst.

Ein erfindungsgemäß hergestellter Fahrwerkslenker für ein Fahrzeug ist in Patentanspruch 6 beansprucht.

Ein Fahrzeug mit einem erfindungsgemäß hergestellten Fahrwerkslenker ist in Patentanspruch 12 beansprucht.

Ein Verfahren zur Herstellung eines Fahrwerkslenkers umfasst die folgenden Schritte:
- Bereitstellen eines Fahrwerkslenkers, der in einem endständigen Lagerabschnitt mindestens zwei voneinander unter Ausbildung eines Freiraums beabstandete Stege aufweist;
- Einbringen von jeweils einer Lageröffnung in die entsprechenden Stege, wobei die Lageröffnungen koaxial zueinander ausgerichtet sind;
- Einführen einer Lagerhülse in die Lageröffnungen;
- Ausformen einer oder mehrerer zumindest abschnittsweise radial in den Freiraum hineinragender Umfangsaufweitungen der Lagerhülse, wobei zumindest eine der Umfangsaufweitungen an mindestens einen der Stege unmittelbar axial angrenzt
- Umbördeln mindestens eines der über die Stege axial hinausstehenden Enden der Lagerhülse, wobei jeder Steg durch die Schritte der Umfangsaufweitung der Lagerhülse und des Umbördelns deren Enden mit der Lagerhülse einen Formschluss ausbildet.

Indem die von den koaxialen Lageröffnungen in den Stegen des Fahrwerkslenkers aufgenommene Lagerhülse mit einer oder mehreren zumindest abschnittsweise radial in den Freiraum zwischen den, vorzugsweise parallel zueinander ausgerichteten, Stegen hineinragenden Umfangsaufweitungen versehen wird, wobei die Umfangsaufweitungen in Axialrichtung an mindestens einen der Stege unmittelbar angrenzen, kann der Festsitz der Lagerhülse in dem Fahrwerkslenker signifikant verbessert werden. Der Verformungsneigung der Stege unter bestimmten Lasten wird durch die Umfangsaufweitungen wirksam entgegengewirkt. Durch Variation von Anzahl, geometrischer Ausformung und räumlicher Anordnung der Umfangsaufweitungen kann der Festsitz der Lagerhülse nach Belieben beeinflusst werden. Die Lagerhülse kann im Ausgangszustand weiterhin einfach geformt und dementsprechend kostengünstig herzustellen sein, da die Fixierung lediglich durch eine Formänderung in einem zusätzlichen Verfahrensschritt nach Einbringen in die Lageröffnungen erfolgt. Durch das Umbördeln mindestens eines der Enden der Lagerhülse in einem Verfahrensschritt vor oder nach der Umfangsaufweitung entsteht ein Kragen, der sich in axialer Richtung an den entsprechenden Steg anlegt. Dadurch wird der Festsitz durch Stabilisierung der Stege gegen Verformung noch weiter erhöht werden, da weitere Freiheitsgrade der Stege beschränkt werden. Besonders bevorzugt erfolgt das Umbördeln der axialen Enden der Lagerhülse in einem gemeinsamen Verfahrensschritt mit der Umfangsaufweitung, so dass die Zeitdauer des Verfahrens gesenkt werden kann. Indem jeder Steg durch die Schritte der Umfangsaufweitung der Lagerhülse und des Umbördelns deren Enden mit der Lagerhülse einen Formschluss ausbildet, kann das axiale Spiel auf ein Minimum reduziert werden, da die Stege dadurch jeweils von beiden Seiten mit der Lagerhülse in Kontakt gebracht werden.

In einer bevorzugten Ausführung des Verfahrens wird das Einbringen der Lageröffnungen in die Stege als Stanzprozess oder Bohrprozess ausgeführt. Damit lassen sich koaxiale Lageröffnungen besonders einfach in einem Arbeitsschritt erzeugen.

In einer bevorzugten Ausführung des Verfahrens weist die Lagerhülse in ihrem dem Freiraum zugeordneten Abschnitt einen größeren Durchmesser auf und die Umfangsaufweitung erstreckt sich auf die gesamte Lagerhülse. Die Lagerhülse ist demnach stufig ausgebildet, wobei der große Durchmesser Mittelabschnitt der Lagerhülse im Rohzustand immer noch geringer ist, als der Durchmesser der Lageröffnungen. Erst bei der Umfangsaufweitung wird der Durchmesser der gesamten Lagerhülse so erhöht, dass der Mittelabschnitt der Lagerhülse teilweise in den Freiraum eindringt und somit nicht mehr aus den Lageröffnungen entnommen werden kann.

In einer bevorzugten Ausführung des Verfahrens erfolgt die Umfangsaufweitung der Lagerhülse radial umlaufend oder intermittierend. Bei einer intermittierenden Umfangsaufweitung wird nur an bestimmten Stellen bzw. in bestimmten Abständen die Umfangsaufweitung vorgenommen, während die radial umlaufende Umfangsaufweitungen einen geschlossenen Ring ausbildet.

In einer bevorzugten Ausführung des Verfahrens erfolgt die Umfangsaufweitung mittels eines in die Lagerhülse einführbaren Spreizdorns. Der Spreizdorn kann sich zumindest teilweise radial aufweiten und formt dadurch die Lagerhülse entsprechend um.

Ein nach dem erfindungsgemäßen Verfahren hergestellter Fahrwerkslenker weist in einer bevorzugten Ausführungsform eine Lagerhülse auf, die als ein Rohrabschnitt ausgebildet ist.

In einer bevorzugten Ausführung des Fahrwerkslenkers weist die Lagerhülse in ihrem dem Freiraum zugeordneten Abschnitt einen größeren Durchmesser auf.

In einer bevorzugten Ausführung des Fahrwerkslenkers bildet die Lagerhülse durch die Umfangsaufweitung einen Falz aus. Ein Falz soll im Kontext dieses Patents als eine Umfangsaufweitung verstanden werden, die durch eine bloße Materialverformung ohne Materialbruch dargestellt wird. Ein Falz zeichnet sich demnach durch einen eher geschwungenen Querschnittsverlauf aus.

In einer bevorzugten Ausführung des Fahrwerkslenkers bildet die Lagerhülse durch die Umfangsaufweitung eine Ausprägung aus. Eine Ausprägung soll im Kontext dieses Patents als eine Umfangsaufweitung verstanden werden, die durch eine Materialverformung mit einhergehendem (partiellen) Materialbruch dargestellt wird. Eine Ausprägung zeichnet sich demnach durch einen sehr abrupten Querschnittsverlauf aus.

In einer bevorzugten Ausführung des Fahrwerkslenkers verläuft die Ausprägung oder der Falz in axialer oder radialer Erstreckung der Lagerhülse. Bei einer axialen Erstreckung der Ausprägung oder des Falzes kontaktiert eine Ausprägung oder ein Falz beide Stege gleichzeitig. Für einen besseren Festsitz sind vorzugsweise mehrere dieser axial verlaufenden Ausprägungen oder Falze über den radialen Umfang der Lagerhülse herum anzuordnen. Bei einer radialen Erstreckung der Ausprägung oder des Falzes kontaktiert eine Ausprägung oder ein Falz einen der Stege, wobei mehrere dieser Ausprägungen oder Falze über den radialen Umfang verteilt anzuordnen sind. Für einen besseren Festsitz sind an dem axial gegenüberliegenden Steg analoge Ausprägungen oder Falze auszubilden.

Ein Fahrzeug hat mindestens einen nach dem erfindungsgemäßen Verfahren hergestellten Fahrwerkslenker.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1a zwei Schnittansichten einer ersten Ausführungsform des Fahrwerklenkers zu zwei verschiedenen Verfahrensschritten;
Fig. 1b eine isometrische Teilschnittansicht einer ersten Ausführungsform des Fahrwerklenkers;
Fig. 2a zwei Schnittansichten einer zweiten Ausführungsform des Fahrwerklenkers zu zwei verschiedenen Verfahrensschritten;
Fig. 2b eine isometrische Teilschnittansicht einer zweiten Ausführungsform des Fahrwerklenkers;
Fig. 3a zwei Schnittansichten einer dritten Ausführungsform des Fahrwerklenkers zu zwei verschiedenen Verfahrensschritten;
Fig. 3b eine isometrische Teilschnittansicht einer dritten Ausführungsform des Fahrwerklenkers;
Fig. 4a zwei Schnittansichten einer vierten Ausführungsform des Fahrwerklenkers zu zwei verschiedenen Verfahrensschritten;
Fig. 4b eine isometrische Teilschnittansicht einer vierten Ausführungsform des Fahrwerklenkers;
Fig. 5a zwei Schnittansichten einer fünften Ausführungsform des Fahrwerklenkers zu zwei verschiedenen Verfahrensschritten;
Fig. 5b eine isometrische Teilschnittansicht einer fünften Ausführungsform des Fahrwerklenkers;
Fig. 6a zwei Schnittansichten einer sechsten Ausführungsform des Fahrwerklenkers zu zwei verschiedenen Verfahrensschritten;
Fig. 6b eine isometrische Teilschnittansicht einer sechsten Ausführungsform des Fahrwerklenkers;
Fig. 7a eine Schnittansicht einer siebten Ausführungsform des Fahrwerklenkers nach Durchführung des Verfahrens;
Fig. 7b eine isometrische Teilschnittansicht einer siebten Ausführungsform des Fahrwerklenkers;
Fig. 8 eine isometrische Ansicht des Fahrwerklenkers mit eingepresstem Lager.

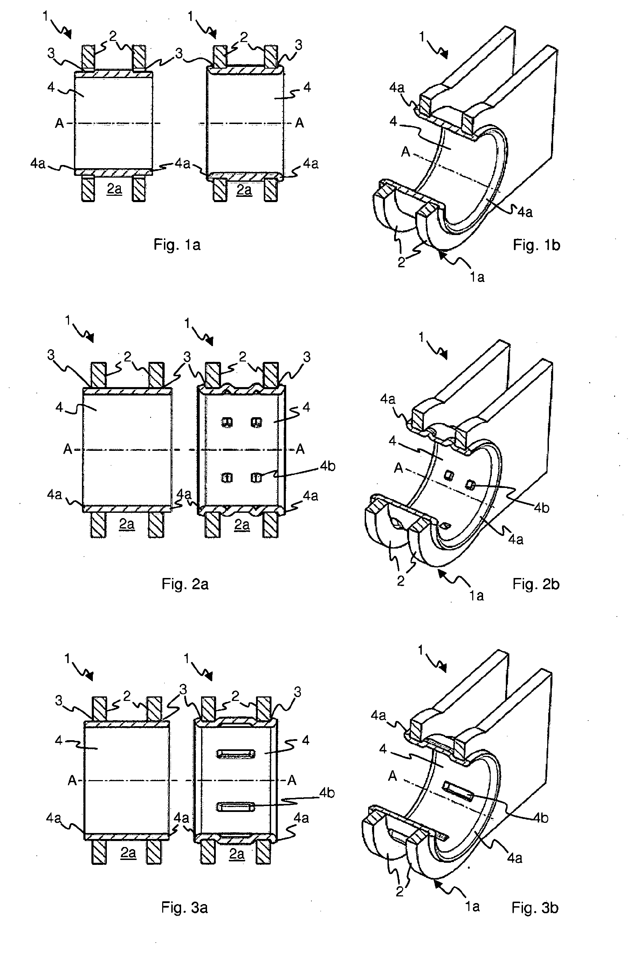

Gemäß der Fig. 1a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. In Axialrichtung A wird eine als Rohrabschnitt ausgebildete Lagerhülse 4 in die Lageröffnungen 3 mit Spiel eingeführt, was in der linken Darstellung der Fig. 1a bereits geschehen ist. Die Lagerhülse 4 hat einen abgestuften Durchmesser, wobei ein dem Freiraum 2a zugeordneter Mittelabschnitt der Lagerhülse 4 einen größeren Durchmesser aufweist, als die sich beiderseits anschließenden Seitenabschnitte. Die rechte Darstellung der Fig. 1a und die Fig. 1b zeigen den Fahrwerkslenker 1 nach der vollumfänglichen Umfangsaufweitung der Lagerhülse 4, wodurch der Mittelabschnitt in den Freiraum 2a hineinragt. Die axiale Erstreckung des Mittelabschnitts entspricht ungefähr der axialen Erstreckung des Freiraums 2a. Die beiden Enden 4a der Lagerhülse 4 wurden umgebördelt, so dass die Lagerhülse 4 insgesamt einen festen Formschluss mit den Stegen 2 ausbildet.

Gemäß der Fig. 2a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. In Axialrichtung A wird eine als Rohrabschnitt ausgebildete Lagerhülse 4 in die Lageröffnungen 3 eingeführt, was in der linken Darstellung der Fig. 2a bereits geschehen ist. Die Lagerhülse 4 ist als ein Rohrabschnitt mit konstantem Durchmesser ausgebildet. Die rechte Darstellung der Fig. 2a und die Fig. 2b zeigen den Fahrwerkslenker 1 nach der Umfangsaufweitung, die vorliegend nur partiell erfolgt ist. In bestimmten Winkelabständen um den radialen Umfang der Lagerhülse 4 verteilt wurden kleine Falze 4b in die Lagerhülse 4 eingebracht, die in unmittelbarer axialer Nähe zu dem entsprechenden Steg 2 in den Freiraum 2a einragen. Die beiden Enden 4a der Lagerhülse 4 wurden umgebördelt, so dass die Lagerhülse 4 insgesamt einen festen Formschluss mit den Stegen 2 ausbildet.

Gemäß der Fig. 3a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. In Axialrichtung A wird eine als Rohrabschnitt ausgebildete Lagerhülse 4 in die Lageröffnungen 3 eingeführt, was in der linken Darstellung der Fig. 3a bereits geschehen ist. Die Lagerhülse 4 ist als ein Rohrabschnitt mit konstantem Durchmesser ausgebildet. Die rechte Darstellung der Fig. 3a und die Fig. 3b zeigen den Fahrwerkslenker 1 nach der Umfangsaufweitung, die vorliegend nur partiell erfolgt ist. In bestimmten Winkelabständen um den radialen Umfang der Lagerhülse 4 verteilt wurden Falze 4b in die Lagerhülse 4 eingebracht, die sich axial zwischen den Stegen 2 über den Freiraum 2a erstrecken. Die beiden Enden 4a der Lagerhülse 4 wurden umgebördelt, so dass die Lagerhülse 4 insgesamt einen festen Formschluss mit den Stegen 2 ausbildet.

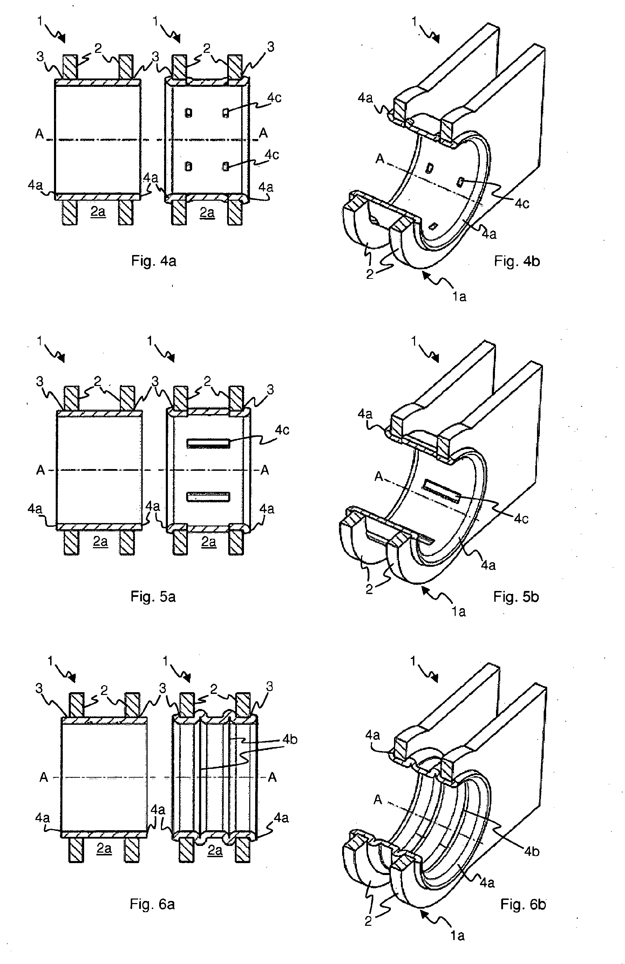

Gemäß der Fig. 4a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. In Axialrichtung A wird eine als Rohrabschnitt ausgebildete Lagerhülse 4 in die Lageröffnungen 3 eingeführt, was in der linken Darstellung der Fig. 4a bereits geschehen ist. Die Lagerhülse 4 ist als ein Rohrabschnitt mit konstantem Durchmesser ausgebildet. Die rechte Darstellung der Fig. 4a und die Fig. 4b zeigen den Fahrwerkslenker 1 nach der Umfangsaufweitung, die vorliegend nur partiell erfolgt ist. In bestimmten Winkelabständen, um den radialen Umfang der Lagerhülse 4 verteilt, wurden kleine Ausprägungen 4c in die Lagerhülse 4 eingebracht, die in unmittelbarer axialer Nähe zu dem entsprechenden Steg 2 in den Freiraum 2a einragen und mit ihren Bruchkanten an den Stegen 2 anliegen. Die beiden Enden 4a der Lagerhülse 4 wurden umgebördelt, so dass die Lagerhülse 4 insgesamt einen festen Formschluss mit den Stegen 2 ausbildet.

Gemäß der Fig. 5a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. In Axialrichtung A wird eine als Rohrabschnitt ausgebildete Lagerhülse 4 in die Lageröffnungen 3 eingeführt, was in der linken Darstellung der Fig. 5a bereits geschehen ist. Die Lagerhülse 4 ist als ein Rohrabschnitt mit konstantem Durchmesser ausgebildet. Die rechte Darstellung der Fig. 5a und die Fig. 5b zeigen den Fahrwerkslenker 1 nach der Umfangsaufweitung, die vorliegend nur partiell erfolgt ist. In bestimmten Winkelabständen um den radialen Umfang der Lagerhülse 4 verteilt wurden Ausprägungen 4c in die Lagerhülse 4 eingebracht, die sich axial zwischen den Stegen 2 über den Freiraum 2a erstrecken, wobei die seitlichen Bruchkanten jeweils an den Stegen 2 anliegen. Die beiden Enden 4a der Lagerhülse 4 wurden umgebördelt, so dass die Lagerhülse 4 insgesamt einen festen Formschluss mit den Stegen 2 ausbildet.

Gemäß der Fig. 6a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. In Axialrichtung A wird eine als Rohrabschnitt ausgebildete Lagerhülse 4 in die Lageröffnungen 3 eingeführt, was in der linken Darstellung der Fig. 6a bereits geschehen ist. Die Lagerhülse 4 ist als ein Rohrabschnitt mit konstantem Durchmesser ausgebildet. Die rechte Darstellung der Fig. 6a und die Fig. 6b zeigen den Fahrwerkslenker 1 nach der Umfangsaufweitung, die vorliegend radial umlaufend erfolgt ist. Vorzugsweise kann das radial umlaufende aufstülpen der Lagerhülse 4 durch ein Zusammenpressen der Lagerhülse 4 in Axialrichtung A unterstützt werden. Jeder der beiden umlaufenden Falze 4b ragt in unmittelbarer Nähe zu dem entsprechenden Steg 2 in den Freiraum 2a ein. Die beiden Enden 4a der Lagerhülse 4 wurden umgebördelt, so dass die Lagerhülse 4 insgesamt einen festen Formschluss mit den Stegen 2 ausbildet.

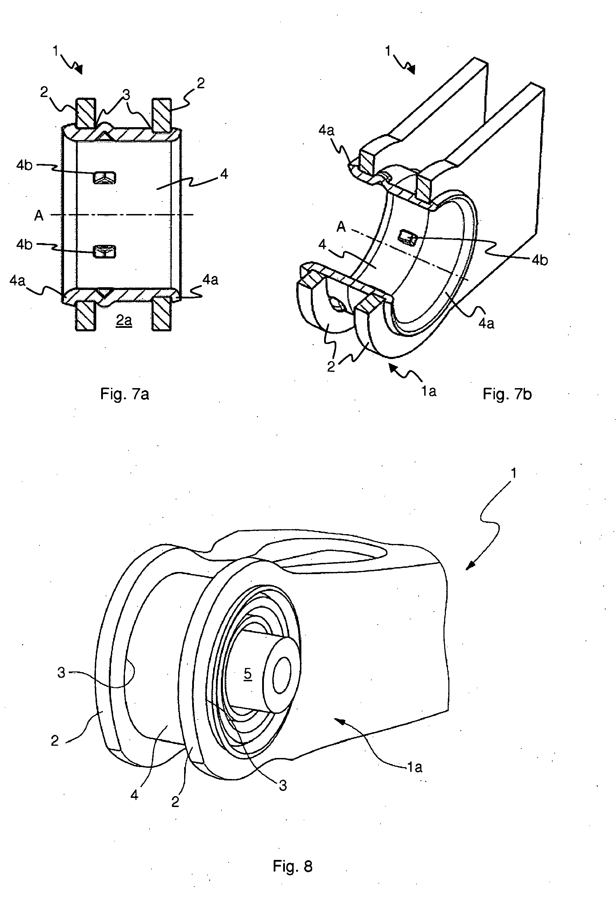

Gemäß der Fig. 7a hat ein Fahrwerkslenker 1 zwei parallel zueinander unter Ausbildung eines dazwischenliegenden Freiraums 2a verlaufende Stege 2. Jeder dieser Stege 2 hat eine Lageröffnung 3, so dass die beiden Lageröffnungen 3 koaxial zueinander angeordnet sind. Jedoch hat eine der beiden Lageröffnungen 3 einen größeren Durchmesser als die andere (im vorliegenden Beispiel ist der Durchmesser der linken Lageröffnung 3 größer als der der rechten Lageröffnung 3). In Axialrichtung A wird eine als Rohrabschnitt ausgebildete Lagerhülse 4 in die Lageröffnungen 3 eingeführt und anschließend die partielle Umfangsaufweitung durchgeführt, was vorliegend bereits geschehen ist. Die Lagerhülse 4 ist dabei gestuft ausgebildet, wobei ein Abschnitt im Durchmesser mit der größeren Lageröffnung 3 korrespondiert und ein weiterer Abschnitt im Durchmesser mit der kleineren Lageröffnung 3 korrespondiert. Die Lagerhülse 4 wird vom Steg 2 mit der größeren Lageröffnung 3 her eingeführt, bis die Lagerhülse 4 an dem Steg 2 mit der kleineren Lageröffnung 3 axial anschlägt. Für den Steg 2 mit der größeren Lageröffnung 3 ist die Umfangsaufweitung partiell erfolgt, wobei in bestimmten Winkelabständen, um den radialen Umfang der Lagerhülse 4 verteilt, kleine Falze 4b in die Lagerhülse 4 eingebracht wurden, die in unmittelbarer axialer Nähe zu dem entsprechenden Steg 2 in den Freiraum 2a einragen. Die beiden Enden 4a der Lagerhülse 4 wurden umgebördelt, so dass die Lagerhülse 4 insgesamt einen festen Formschluss mit den Stegen 2 ausbildet.

Gemäß der Fig. 8 kann nach der Umfangsaufweitung in die Lagerhülse 4 ein Lager 5 eingepresst werden, das zur schwenkbaren Fixierung des Fahrwerkslenkers 1 an entsprechenden Bauteilen eines Fahrzeugs (vorliegend nicht dargestellt) dient.

Denkbar und im Rahmen dieser Offenbarung als offenbart anzusehen sind auch beliebige Kombinationen der einzelnen hier gezeigten Ausführungsformen.

### Liste der Bezugszeichen:

- A: Axialrichtung

- 1: Fahrwerkslenker
- 1a: Lagerabschnitt
- 2: Steg
- 2a: Freiraum
- 3: Lageröffnung
- 4: Lagerhülse
- 4a: Ende der Lagerhülse
- 4b: Falz
- 4c: Ausprägung
- 5: Lager

## Patentansprüche

1. Verfahren zur Herstellung eines Fahrwerkslenkers (1) umfassend die folgenden Schritte:
- Bereitstellen eines Fahrwerkslenkers (1), der in einem endständigen Lagerabschnitt (1a) mindestens zwei voneinander unter Ausbildung eines Freiraums (2a) beabstandete Stege (2) aufweist;
- Einbringen von jeweils einer Lageröffnung (3) in die entsprechenden Stege (2), wobei die Lageröffnungen (3) koaxial zueinander ausgerichtet sind;
- Einführen einer Lagerhülse (4) in die Lageröffnungen (3);
- Ausformen einer oder mehrerer zumindest abschnittsweise radial in den Freiraum (2a) hineinragender Umfangsaufweitungen der Lagerhülse (4), wobei zumindest eine der Umfangsaufweitungen an mindestens einen der Stege (2) unmittelbar axial (A) angrenzt;
- Umbördeln mindestens eines der über die Stege (2) axial (A) hinausstehenden Enden (4a) der Lagerhülse, wobei jeder Steg (2) durch die Schritte der Umfangsaufweitung und des Umbördelns der Enden (4a) mit der Lagerhülse (4) einen Formschluss ausbildet.

2. Verfahren nach Anspruch 1, **dadurch gekennzeichnet, dass** das Einbringen der Lageröffnungen (3) in die Stege (2) als Stanzprozess oder Bohrprozess ausgeführt wird.

3. Verfahren nach Anspruch 1 oder 2, **dadurch gekennzeichnet, dass** die Lagerhülse (4) in ihrem dem Freiraum (2a) zugeordneten Abschnitt einen größeren Durchmesser aufweist und die Umfangsaufweitung sich auf die gesamte Lagerhülse (4) erstreckt.

4. Verfahren nach Anspruch 1 oder 2, **dadurch gekennzeichnet, dass** die Umfangsaufweitung der Lagerhülse (4) radial umlaufend oder intermittierend erfolgt.

5. Verfahren nach einem der Ansprüche 1 bis 4, **dadurch gekennzeichnet, dass** die Umfangsaufweitung mittels eines in die Lagerhülse (4) einführbaren Spreizdorns erfolgt.

6. Fahrwerkslenker (1), hergestellt mit einem Verfahren nach Anspruch 1.

7. Fahrwerkslenker (1) nach Anspruch 6, **dadurch gekennzeichnet, dass** die Lagerhülse (4) als ein Rohrabschnitt ausgebildet ist.

8. Fahrwerkslenker (1) nach Anspruch 6 oder 7, **dadurch gekennzeichnet, dass** die Lagerhülse (4) in ihrem dem Freiraum (2a) zugeordneten Abschnitt einen größeren Durchmesser aufweist.

9. Fahrwerkslenker (1) nach einem der Ansprüche 6 oder 7, **dadurch gekennzeichnet, dass** die Lagerhülse (4) durch die Umfangsaufweitung einen Falz (4b) ausbildet.

10. Fahrwerkslenker (1) nach einem der Ansprüche 6 oder 7, **dadurch gekennzeichnet, dass** die Lagerhülse (4) durch die Umfangsaufweitung eine Ausprägung (4c) ausbildet.

11. Fahrwerkslenker (1) nach Anspruch 9 oder 10, **dadurch gekennzeichnet, dass** die Ausprägung (4c) oder der Falz (4b) in axialer (A) oder radialer Erstreckung der Lagerhülse (4) verläuft.

12. Fahrzeug mit mindestens einem Fahrwerkslenker (1), hergestellt mit einem Verfahren nach Anspruch 1.

## Claims

1. Method for producing a chassis control arm (1), comprising the following steps:
- providing a chassis control arm (1) which comprises, in an end bearing portion (1 a), at least two connecting portions (2) which are spaced apart from one another to form a clearance (2a);
- making a bearing opening (3) in each of the corresponding connecting portions (2), wherein the bearing openings (3) are aligned coaxially with respect to one another;
- inserting a bearing sleeve (4) into the bearing openings (3);
- shaping one or more peripheral expansions of the bearing sleeve (4), which project radially into the clearance (2a) at least in portions, wherein at least one of the peripheral expansions directly axially (A) adjoins at least one of the connecting portions (2),
- beading at least one of the ends (4a) of the bearing sleeve which axially (A) project beyond the connecting portions (2), wherein each connecting portion (2) forms an interlocking fit with the bearing sleeve (4) as a result of the steps of peripheral expansion and beading of the ends (4a).

2. Method according to claim 1, **characterised in that** the bearing openings (3) are formed in the connecting portions (2) by a stamping process or boring process.

3. Method according to either claim 1 or claim 2, **characterised in that** the portion of the bearing sleeve (4) associated with the clearance (2a) has a greater diameter and the peripheral expansion extends over the entirety of the bearing sleeve (4).

4. Method according to either claim 1 or claim 2, **characterised in that** the bearing sleeve (4) is peripherally expanded radially circumferentially or intermittently.

5. Method according to any of claims 1 to 4, **characterised in that** the peripheral expansion is carried out by means of an expansion mandrel which can be inserted into the bearing sleeve (4).

6. Chassis control arm (1) produced by means of a method according to claim 1.

7. Chassis control arm (1) according to claim 6, **characterised in that** the bearing sleeve (4) is formed as a tube portion.

8. Chassis control arm (1) according to either claim 6 or claim 7, **characterised in that** the portion of the bearing sleeve (4) assigned to the clearance (2a) has a larger diameter.

9. Chassis control arm (1) according to either claim 6 or claim 7, **characterised in that** the bearing sleeve (4) forms a fold (4b) as a result of the peripheral expansion.

10. Chassis control arm (1) according to either claim 6 or claim 7, **characterised in that** the bearing sleeve (4) forms a shaped region (4c) as a result of the peripheral expansion.

11. Chassis control arm (1) according to either claim 9 or claim 10, **characterised in that** the shaped region (4c) or the fold (4b) extends in an axial (A) or radial extension of the bearing sleeve (4).

12. Vehicle comprising at least one chassis control arm (1) produced by means of a method according to claim 1.

## Revendications

1. Procédé de fabrication d'un bras de suspension (1) comprenant les étapes consistant à :
- préparer un bras de suspension (1), qui présente dans une section de palier terminale (1a) au moins deux ailettes (2) espacées l'une de l'autre en formant un espace libre (2a) ;
- ménager respectivement une ouverture de palier (3) dans les ailettes correspondantes (2), dans lequel les ouvertures de palier (3) sont alignées coaxialement l'une sur l'autre ;
- introduire une douille de palier (4) dans les ouvertures de palier (3) ;
- façonner un ou plusieurs évasements périphériques de la douille de palier (4) faisant saillie au moins par sections radialement dans l'espace libre (2a), dans lequel au moins l'un des évasements périphériques se limite directement axialement (A) à au moins l'une des ailettes (2) ;
- brider au moins l'une des extrémités (4a) de la douille de palier qui dépasse axialement (A) sur des ailettes, dans lequel chaque ailette (2) forme une jonction mécanique avec la douille de palier (4) à la suite des étapes d'évasement périphérique et de bridage des extrémités (4a).

2. Procédé selon la revendication 1, **caractérisé en ce que** l'aménagement des ouvertures de palier (3) dans les ailettes (2) se fait par un procédé d'estampage ou de perforation.

3. Procédé selon la revendication 1 ou la revendication 2, **caractérisé en ce que** la douille de palier (4) présente dans sa section affectée à l'espace libre (2a) un plus grand diamètre et l'évasement périphérique s'étend sur toute la douille de palier (4).

4. Procédé selon la revendication 1 ou la revendication 2, **caractérisé en ce que** l'évasement périphérique de la douille de palier (4) se fait radialement en continu ou de manière, intermittente.

5. Procédé selon l'une quelconque des revendications 1 à 4, **caractérisé en ce que** l'évasement périphérique se fait à l'aide d'un mandrin extensible qui peut être introduit dans la douille de palier (4).

6. Bras de suspension (1) fabriqué par un procédé selon la revendication 1.

7. Bras de suspension (1) selon la revendication 6, **caractérisé en ce que** la douille de palier (4) se présente sous la forme d'une section de tube.

8. Bras de suspension (1) selon la revendication 6 ou la revendication 7, **caractérisé en ce que** la douille de palier (4) présente un plus grand diamètre dans sa section affectée à l'espace libre (2a).

9. Bras de suspension (1) selon l'une quelconque des revendications 6 ou 7, **caractérisée en ce que** la douille de palier (4) forme un repli (4b) pour l'évasement périphérique.

10. Bras de suspension (1) selon l'une quelconque des revendications 6 ou 7, **caractérisé en ce que** la douille de palier (4) forme un gaufrage (4c) pour l'évasement périphérique.

11. Bras de suspension (1) selon la revendication 9 ou la revendication 10, **caractérisé en ce que** le gaufrage (4c) ou le repli (4b) s'étend dans l'extension axiale (A) ou radiale de la douille de palier (4).

12. Véhicule comprenant un bras de suspension (1) fabriqué par un procédé selon la revendication 1.
